Europäisches Patentamt

**European Patent Office**

**Office européen des brevets**

(19)

(11) **EP 0 974 105 B1**

(12) **EUROPÄISCHE PATENTSCHRIFT**

(45) Veröffentlichungstag und Bekanntmachung des Hinweises auf die Patenterteilung:
**16.08.2001 Patentblatt 2001/33**

(21) Anmeldenummer: **98959713.3**

(22) Anmeldetag: **06.10.1998**

(51) Int Cl.$^7$: **G06F 17/14**

(86) Internationale Anmeldenummer:
**PCT/DE98/02958**

(87) Internationale Veröffentlichungsnummer:
**WO 99/19833 (22.04.1999 Gazette 1999/16)**

(54) **VERFAHREN ZUR MEHRDIMENSIONALEN, DISKRETEN WAVELET-TRANSFORMATION UND TRANSFORMATIONSEINHEIT ZUR DURCHFÜHRUNG DES VERFAHRENS**

METHOD FOR MULTIDIMENSIONAL DISCREET WAVELET TRANSFORMATION AND TRANSFORMATION UNIT FOR CARRYING OUT THIS METHOD

METHODE DE TRAITEMENT DISCRET MULTIDIMENSIONNEL EN ONDELETTES ET UNITE DE TRAITEMENT POUR L'APPLICATION DE CETTE METHODE

(84) Benannte Vertragsstaaten:
**AT BE CH DE DK ES FI FR GB GR IE IT LI LU NL PT SE**

(30) Priorität: **08.10.1997 DE 19744407**

(43) Veröffentlichungstag der Anmeldung:
**26.01.2000 Patentblatt 2000/04**

(73) Patentinhaber: **Luratech Gesellschaft für Luft-und Raumfahrt-Technologie & Multimedia mbH**
**10245 Berlin (DE)**

(72) Erfinder:
• **MARTIN, Uwe**
  **D-15345 Prötzel (DE)**
• **RÖSEL, Reinhardt**
  **D-12524 Berlin (DE)**
• **THIERSCHMANN, Michael**
  **D-14197 Berlin (DE)**

(74) Vertreter: **Pfeiffer, Eva**
  **Brucknerstrasse 9 B**
  **01309 Dresden (DE)**

(56) Entgegenhaltungen:
**DE-A- 19 626 615          US-A- 5 537 493**

• **ANTONINI M: "IMAGE CODING USING WAVELET TRANSFORM" IEEE TRANSACTIONS ON IMAGE PROCESSING, Bd. 1, Nr. 2, 1. April 1992, Seiten 205-220, XP000367547**
• **SIMMERT O: "PRIORITAETSCODIERTES VERFAHREN ZUR DATENKOMPRIMIERUNG" IK INGENIEUR DER KOMMUNIKATIONSTECHNIK, Bd. 47, Nr. 2, 1. März 1997, Seiten 39-42, XP000690239**

**Beschreibung**

Die Erfindung betrifft ein Verfahren zur mehrdimensionalen, diskreten Wavelet-Transformation, beispielsweise digitaler oder digitalisierter Analogdaten mit interpolierenden Wavelets sowie eine Transformationseinheit zur Durchführung des Verfahrens, beispielsweise zum Zwecke anschließender Datenkompression.

Die Erfindung kann vorrangig in der Raumfahrt, zur Beobachtung und Vermessung der Erdoberfläche mit Hilfe von Satelliten, für Zwecke der zivilen und militärischen Luftfahrt. für die Auswertung von Röntgenbildern, in der Sicherheitstechnik, sowie in industriellen bildgebenden Verfahren angewendet werden.

Ein besonderer Schwerpunkt der Erfindung ist die Möglichkeit der Durchführung einer exakten, mehrdimensionalen Wavelettransformation unter Berücksichtigung einer sehr begrenzten zur Verfügung stehenden Speichermenge. Bemerkenswert ist, daß es bei der vorliegenden Erfindung ebenfalls möglich ist, eine mehrdimensionale Transformation auf Daten durchzuführen, die in einer Dimension eine unendliche Ausdehnung besitzen. So ist es beispielsweise möglich, Bilder mit unendlicher Bildhöhe zu transformieren. oder Audiodaten unendlicher Dauer oder einen Videodatenstrom kontinuierlich zu transformieren. Desweiteren ermöglicht die vorliegende Erfindung die Durchführung einer mehrdimensionalen Wavelettransformation bei seriell eingehenden Eingangsdaten.

Die Transformation digitaler Daten oder digitalisierter Analogdaten in verschiedene Frequenzbänder mit Hilfe der bekannten Wavelet-Transformation bietet gegenwärtig die besten Voraussetzungen für eine verlustlose Kompression einer großen anfallenden Datenmenge, beispielsweise zum Zwecke der Fernübertragung und Weiterverarbeitung. Die Datenkompression mittels Wavelet-Tranformation ist allerdings bisher nur möglich, wenn das zu komprimierende Signal in segmentierter Form vorliegt. Am Beispiel von segmentierten Bildsignalen werden die einzelnen Segmente (ein ganzes Bild oder ein abgeschlossenes Teilbild) zunächst zeilenweise von links nach rechts und erst anschließend komplett von oben nach unten mehrfach hintereinander abgetastet und komprimiert. Für die Kompression von Bilddaten aus Satellitenaufnahmen oder anderer unendlicher Bildstreifen konnte die Wavelet-Transformation bisher nicht angewendet werden ohne, die theoretisch unendlich großen Bilder in eine Vielzahl endlicher Bildausschnitte oder -segmente zu zerlegen. Aus diesem Grunde ist es bisher nicht möglich, die hohe Bildqualität und Übertragungsgeschwindigkeit, welche die Wavelet-Transformation bei der Übertragung komprimierter Bilddaten ermöglicht, auch für die Übertragung unendlich langer, kontinuierlich anfallender Bildstreifen zu nutzen.

In DE 196 26 615 ist ein Beispiel für einen, dem gegenwärtigen Stand der Technik entsprechenden technischen Anwendungsfall der bekannten Wavelet Transformationen dargestellt. Unter Verwendung einfacher reversibler S- und TS-Wavelets wird zunächst ein mehrzeiliger Datenstreifen (s. Fig. 22 aus DE 196 26 615) vollständig bearbeitet, wobei bei nicht minimallangen Wavelet-Filtern (TS-Wavelet) bereits ein Teil der Zeilen des nächsten Datenstreifens als "Vorausschau" in die Betrachtung einbezogen werden muß. Nach abgeschlossener Bearbeitung des ersten Streifens wird dessen Vorausschauteil mit weiteren "vorausschauenden" Anteilen nochmals als abgeschlossenes Bild bearbeitet usw., bis alle Streifen einzeln und in allen Stufen bearbeitet sind. Diese Methode hat den Nachteil, daß sie eine sehr hohe Speicherkapazität erfordert, da fast alle Zeilen durch den Zwischenschritt der "Vorausschau" zweifach gespeichert werden müssen. Um den Speicherbedarf etwas zu minimieren, wird in einer Ausführungsform in DE 196 26 615 zur Durchführung einer zweidimensionalen Wavelettranformation in vertikaler Richtung das minimallange S-Waveletfilter mit schlechen Transformationseigenschaften verwendet.

Um diese Nachteile zu verringern, wurde bereits vorgeschlagen, eine mehrstufige Transformation dadurch zu realisieren, daß der Tiefpaßanteil einer Stufe mit beliebigen Dimensionen als Eingangswert für die nächstfolgende Stufe verwendet wird (s. "Ingenieur der Kommunikationstechnik", IK 47 (1997), 2 S. 39 ff.), wobei aber zunächst der gesamte Tiefpaßanteil vorhanden sein muß, ehe er transformiert werden kann. Bei Anwendung dieses Verfahrens müssen die eingesetzten Speicher ebenfalls so groß sein, um das gesamte Bild zu speichern.

Die Beschreibung der Erfindung erfolgt im weiteren unter Verwendung folgender Begriffsinhalte bzw. Grundlagen:

- Mit "Datenkompression" werden Techniken und Methoden bezeichnet, die eine Anzahl von Daten oder Symbolen derart auf Kodewörter abbilden, daß die Darstellung der Kodewörter weniger Bits benötigt als die Darstellung der originalen Daten. Dadurch bietet sich mit der Datenkompression ein nützliches Werkzeug bei der Speicherung oder Übertragung von großen Datenmengen.

- Die Eingangssymbole können ein-, zwei- oder mehrdimensionaler Natur sein und repräsentieren im Allgemeinen physikalische Größen wie z.B. die räumliche Lichtintensitätsverteilung bei Bildsignalen oder auch zeitliche Luftdruckänderungen bei Audio- oder Tonsignalen. Eindimensionale Signale repräsentieren beispielsweise zeitliche oder räumliche Änderungen in einer Richtung, zweidimensionale Signale räumliche Änderungen in zwei Richtungen und mehrdimensionale Signale repräsentieren beispielsweise die zeitliche oder spektrale Änderung räumlich wechselnder physikalischer Größen.

EP 0 974 105 B1

- Die verschiedenen Techniken und Methoden der Datenkompression können grob in verlustbehaftete und verlustlose Kompressionsmethoden unterteilt werden. Die Anwendung verlustbehafteter Kompressionstechniken führt im Allgemeinen zum Verlust von Information, d.h. es kann nicht garantiert werden, daß aus den komprimierten Daten die Originaldaten perfekt wiederhergestellt werden können. Verlustbehaftete Kompression wird derart durchgeführt, daß die Unterschiede zwischen den nach der Rekonstruktion entstehenden Daten und den originalen Daten nicht beanstandbar sind.

- Bei verlustlosen Kompressionsmethoden wird die Kompression derart durchgeführt, daß eine perfekte Wiederherstellung der originalen Daten durch die Rekonstruktion möglich ist.

Bei einer Wavelettransformation handelt es sich um eine mathematisch beschriebene lineare Abbildung eines Raumes $R'' \Rightarrow R''$. Die Abbildungsvorschrift kann in Form einer linearen Faltungsoperation beschrieben werden. Dabei wird das Signal $f$ mit Hilfe der sogenannten Waveletfunktion $\psi$ untersucht. Dies geschieht nach folgender Berechnungsvorschrift:

$$L_{\psi}(a,b) = |a|^{-\frac{1}{2}} \int_{R} f(t)\ \psi\left(\frac{t-b}{a}\right) dt$$

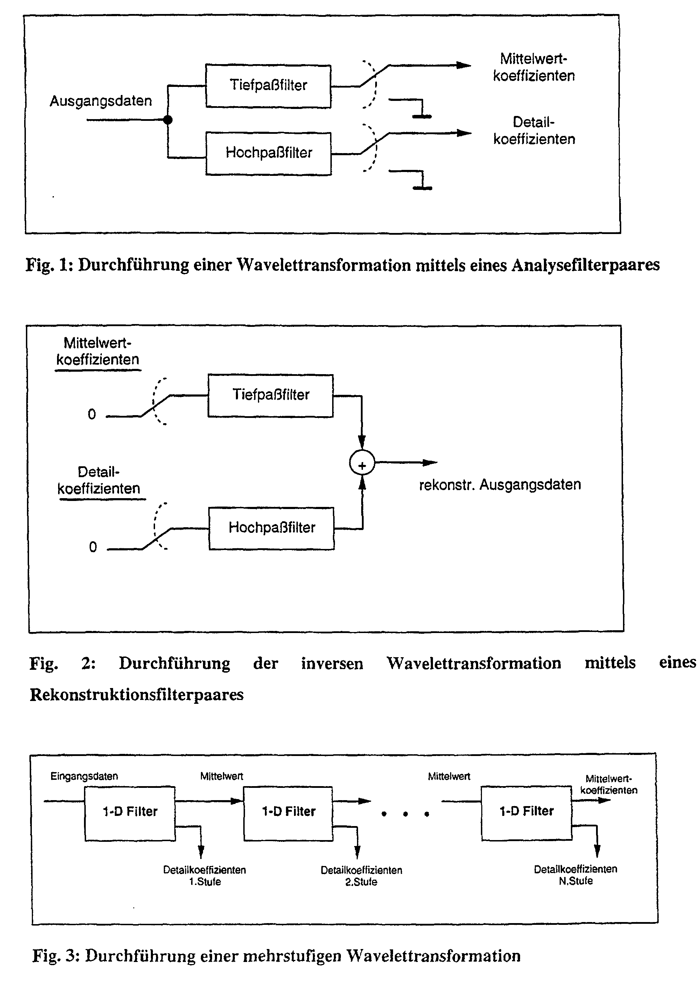

Dabei stellt $L_{\psi}$ die Wavelettransformierte bezüglich der Waveletfunktion $\psi$ dar. Eine derart durchgeführte Wavelettransformation wird auch als kontinuierliche Wavelettransformation bezeichnet.
Bilden zeitdiskrete oder abgetastete Signale den Eingangswertebereich der durchzuführenden Wavelettransformation, dann spricht man von einer diskreten Wavelettransformation. Für eine derartige diskrete Wavelettransformation existiert eine einfache und schnelle Berechnungsvorschrift. Dabei wird eine Wavelettransformation mit Hilfe eines Satzes digitaler Filter durchgeführt. Ein vollständiger Satz von Waveletfiltern besteht dabei aus 4 einzelnen digitalen Filtern, wobei jeweils zwei Filter zusammengehörig angewendet werden. Ein Filterpaar wird dabei als Analysefilterpaar und ein anderes Filterpaar als Synthese- oder Rekonstruktionsfilter bezeichnet werden. Jedes dieser Filterpaare besteht wiederum aus einem Tiefpaß- und Hochpaßfilter.
Eine diskrete Wavelettransformation wird nun folgenderweise durchgeführt:
Das Eingangssignal $x(t)$, das im diskreten Fall als eine Reihe von diskreten Werten $x_i$ existiert, wird mit Hilfe digitaler FIR Filter mit dem Hochpaß und dem Tiefpaß des Analysefilterpaares verknüpft. Das Ergebnis der beiden Filteroperationen wird kritisch unterabgetastet, indem jeder zweite Ergebniswert unterdrückt wird. Die Ergebnisse am Ausgang des Hochpaß-Analysefilters werden als Hochpaß- oder Detailkoeffizienten und die Ergebnisse des Tiefpaß-Analysefilters als Tiefpaß- oder Mittelwertkoeffizienten bezeichnet (Fig. 1).
Die Umkehrung der Wavelettransformation erfolgt mit Hilfe eines Rekonstruktionsfilterpaares (Fig. 2).
Bei der Durchführung einer mehrstufigen Wavelettransformation werden die Ergebnisse der Tiefpaßfilterung, die Mittelwertkoeffizienten weiteren, einstufigen Wavelettransformationen unterzogen (Fig. 3).
Die Aufgabe der Erfindung besteht darin , die Vorteile der Wavelet-Transformation, insbesondere der Anwendung interpolierender Wavelets, für die Übertragung unendlich langer und kontinuierlich anfallender, nicht abgeschlossener Bilder mit geringstmöglichen Speicherkapazitäten zu nutzen.
Insbesondere werden in der vorliegenden Erfindung ein Verfahren und eine Schaltungsanordunung vorgestellt, die eine verlustlose / verlustbehaftete zweidimensionale mehrstufige Wavelet-Transformation durchführen, um dann anschließend mit den transformierten (Bild-)Daten und mit Hilfe eines geeigneten Kodierverfahrens beispielsweise eine verlustlose / verlustbehaftete Datenkompression durchzuführen.
Die Erfindung besteht aus dem in den Patentansprüchen 1 bis 9 beschriebenen Verfahren für eine mehrdimensionale, diskrete Wavelet-Transformation mit interpolierenden Wavelets sowie der in den Ansprüchen 5 bis 8 dargestellten Transformationseinheit zur Durchführung des Verfahrens. Insgesamt ergibt sich daraus ein vollständiges Wavelet-Transformationssystem mit dekorrelierender Transformation der Eingangsdaten, die aus verschiedenartigen Datentypen, beispielsweise Audio- oder Bilddaten, digitalen Daten oder digitalisierten Analogdaten, abgeleitet werden können. Die Erfindung beinhaltet gleichzeitig ein inverses Wavelettransformationssystem zur Umkehrung der durchgeführten Operationen.
Als Signalquelle kann sowohl ein digitaler Speicher oder auch ein digitalisierter Kanal dienen. Die Ausgangsdaten sind ebenso von digitaler Natur. Sie können entweder in einem digitalen Speicher abgelegt oder ebenso über einen digitalen Kanal einer direkten verlustlosen / verlustbehafteten Kodierung unterzogen werden.
Eine Möglichkeit der Implementierung des Transformationssystems in Hardware wird in Ausführungsbeispiel 3 beschrieben und dargestellt.
Im Gegensatz zu den Möglichkeiten, eine Wavelettransformation in Form einer digitalen Filterung durchzuführen, wird in der Erfindung die Möglichkeit einer interpolierenden Wavelettransformation benutzt.

Die interpolierende Wavelettransformation wird dabei erfindungsgemäß in zwei Schritten durchgeführt. Der erste Transformationsschritt wird als Vorhersageschritt "Predict" bezeichnet Der zweite Transformationsschritt, der Aktualisierungsschritt "Update" beendet eine einstufige Transformation. Die einzelnen Schritte sind wiederum mit Hilfe digitaler Filter mit endlicher Impulsantwort (FIR-Filter) durchführbar. Im Gegensatz zu bekannten Wavelettransformationsverfahren werden hier die Filter nicht unabhängig voneinander zur Bestimmung des Hoch- und Tiefpaßanteiles, sondern aufeinander aufbauend aber zeitgleich angewendet. Entgegen der allgemeinen Wavelettransformation mittels FIR-Filter benötigt die interpolierende Wavelettransformation zur Durchführung einer identischen Wavelettransformation mit nichtminimallangen Waveletfiltern deutlich weniger Speicher und führt deutlich weniger Rechenschritte aus. Neben der Bestimmung der Koeffizienten der interpolierenden Wavelettransformation aus den Koeffizienten eines äquivalenten Hoch- und Tiefpaßpaares besteht zusätzlich die Möglichkeit der adaptiven Bestimmung der Koeffizienten aus dem Inhalt der Eingangsdaten.

In den nachfolgenden Ausführungsbeispielen ist die Erfindung für die Transformation digitaler Daten oder digitalisierter Analogdaten dargestellt, wobei als Signalquelle ein digitalisierter Speicher oder ein digitalisierter Kanal dienen können. Die Ausgangsdaten sind demnach ebenso digitaler Natur und können in einem digitalen Speicher oder über einen digitalen Kanal einer direkten verlustlosen / verlustbehafteten Kodierung unterzogen werden.

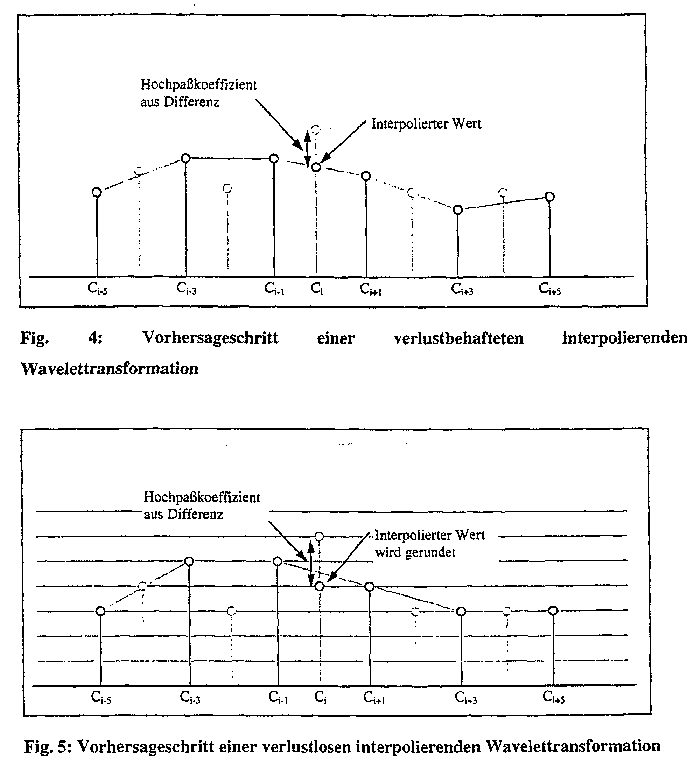

- Beispiel 1 - Interpolierende Wavelettransformation für verlustbehaftete Transformation gemäß Fig. 4

- Beispiel 2 - Interpolierende Wavelettransformation für verlustfreie Transformation gemäß Fig. 5

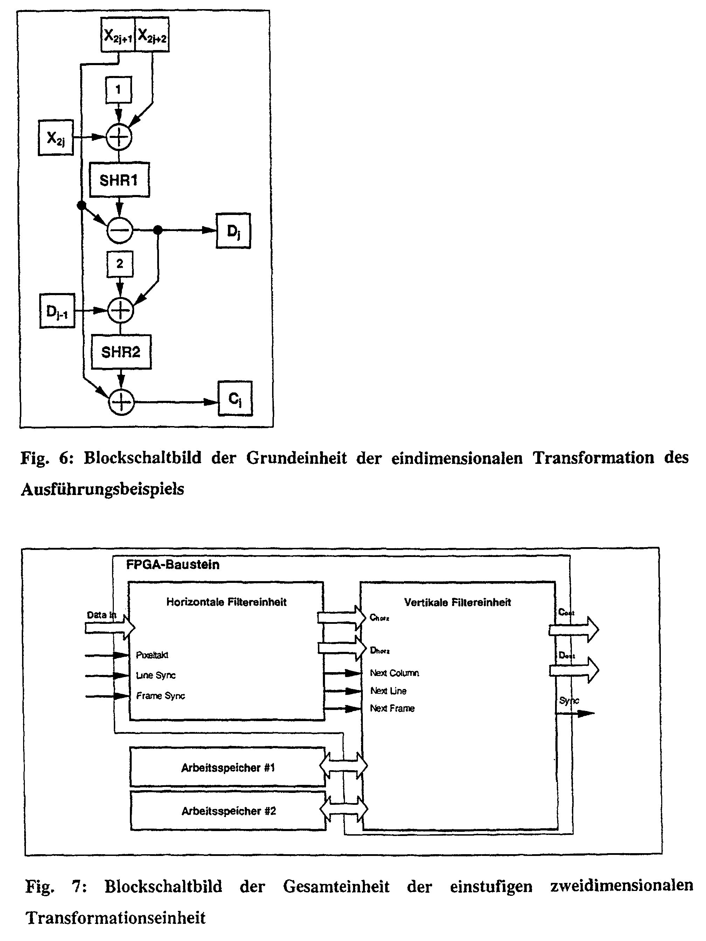

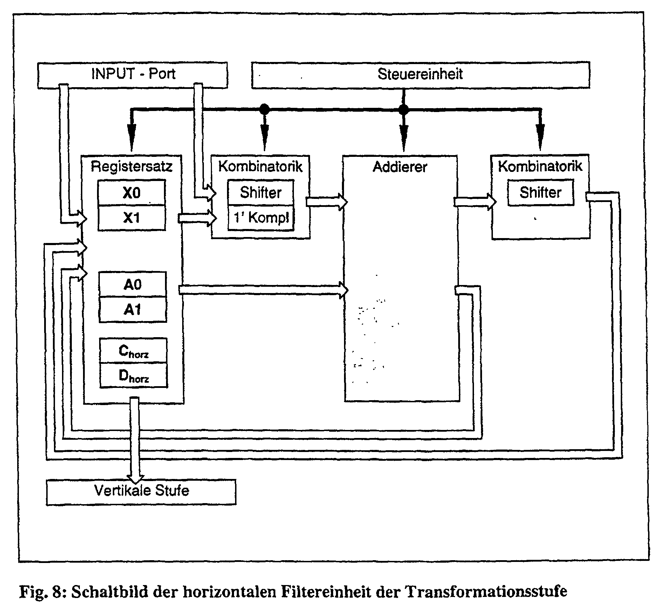

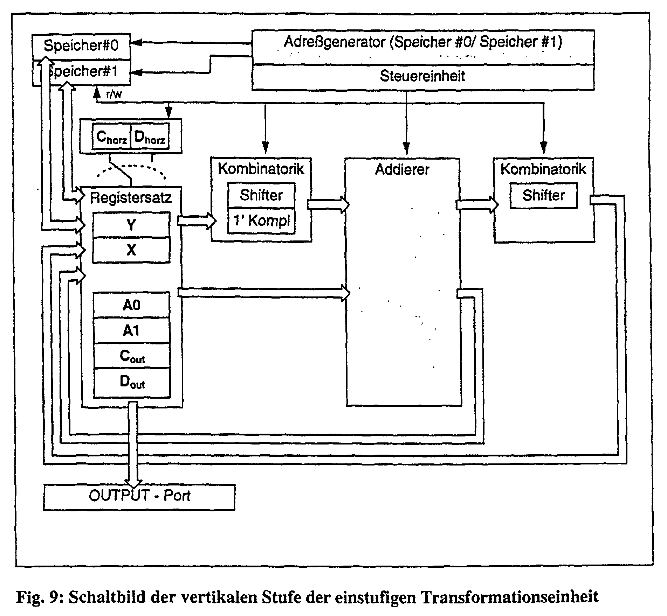

- Beispiel 3 - Schaltungsanordnung zur Implementierung des erfindungsgemäßen Verfahrens in Hardware gem. Fig. 6 - 9 (Transformationseinheit)

Beispiel 1: Interpolierende Wavelettransformation für verlustbehaftete Kompression

Bei der Durchführung der Transformation in zwei voneinander abhängigen Schritten erzeugt der zuerst ausgeführte Vorhersageschritt die Hochpaßkoeffizienten. Dabei wird versucht, bestimmte Werte der Eingangsdatenfolge aus den benachbarten Eingangswerten möglichst genau vorherzusagen. Dies geschieht durch die Berechnung einer gewichteten Summe der benachbarten unterabgetasteten Koeffizienten (beidseitige Linarkombination). Der Vorhersagefehler wird als Hochpaßkoeffizient oder Detailkoeffizient abgespeichert.

Die Koeffizienten der Linearkombination kann man durch Modifikation bekannter Algorithmen wie z.B. Schur-Rekursion, Levinson-Durbin Algorithmus berechnen.

Die folgenden Gleichungen veranschaulichen die Durchführung des Vorhersageschrittes der Transformation.

Fig. 4 illustriert den Vorhersageschritt einer verlustbehafteten eindimensionalen interpolierenden Wavelettransformation.

$D_i$ sei der zu bestimmende Hochpaßkoeffizient (Detailkoeffizient) mit dem Index $i$
$C_i^*$ sei der interpolierte Pixelwert an der Stelle $i$
$D_i$ wird folgendermaßen bestimmt:

$$D_i = C_i - C_i^*$$

wobei $C_i^*$ sich als beidseitige Linearkombination aus der unterabgetasteten Eingangsfolge

$$C_i^* = a_0 \cdot C_{i-1} + a_1 \cdot C_{i+1} + a_2 \cdot C_{i-3} + a_3 \cdot C_{i+3} + \cdots + a_n C_{i+n}$$

ergibt.

Während des Aktualisierungsschrittes der interpolierenden Wavelettransformation bestimmt man aus dem Ergebnis des Vorhersageschrittes (den Detailkoeffizienten) einen Korrekturwert. Mit diesem Korrekturwert werden die noch unveränderten Eingangswerte so korrigiert, daß der Mittelwert der korrigierten Werte mit dem Mittelwert des Originalbildes übereinstimmt. Dies geschieht unter Verwendung einer beidseitigen Linearkombination prinzipiell identisch zum Vorhersageschritt.

$M_i$ sei der zu bestimmende Tiefpaßkoeffizient (Mittelwertkoeffizient) mit dem Index $i$
$K_i^*$ sei der Korrekturwert an der Stelle $i$

$M_i$ wird nun folgendermaßen bestimmt:

$$M_i = C_i + K_i^*$$

wobei sich $K_i^*$ wiederum als beidseitige Linearkombination aus den im Vorhersageschritt berechneten Hochpaßkoeffizienten

$$K_i^* = b_0 \cdot D_{i-1} + b_1 \cdot D_{i+1} + b_2 \cdot D_{i-3} + b_3 \cdot D_{i+3} + \cdots + b_m \cdot D_{i+m}$$

ergibt.

Die Bestimmung der Koeffizienten $b_0 \cdots b_m$ kann ähnlich der Bestimmung der Koeffizienten des Vorhersageschrittes mit den bekannten Optimierungsverfahren erfolgen.

Beispiel 2: Interpolierende Wavelettransformation für verlustlose Kompression

Durch eine geringe Modifikation der Berechnungsvorschrift des Vorhersage- und Aktualisierungsschrittes läßt sich eine Transformation durchführen, die im Bereich der ganzen Zahlen arbeitet, und dadurch eine verlustlose Datenkompression ermöglicht.

Zu diesem Zwecke wird im Vorhersageschritt der mittels einer Linearkombination berechnete Wert auf den nächsten ganzzahligen Wert gerundet, so daß der Detailkoeffizient durch einen ganzzahligen Wert darstellbar ist. Ebenso wird im Aktualisierungsschritt der Korrekturwert auf den nächsten ganzzahligen Wert gerundet, so daß das Ergebnis der Transformation wiederum mit ganzen Zahlen darstellbar ist, wodurch eine verlustlose Kompression ermöglicht wird. Die folgenden Gleichungen illustrieren die Vorgehensweise. (Fig. 5)

$D_i$ sei der zu bestimmende Hochpaßkoeffizient (Detailkoeffizient) mit dem Index i

$C_i^*$ sei der interpolierte Pixelwert an der Stelle $i$

$D_i$ wird folgendermaßen bestimmt:

$$D_i = C_i - C_i^*$$

wobei $C_i^*$ sich als beidseitige Linearkombination aus der unterabgetasteten Eingangsfolge mit anschließender Rundung auf den nächsten ganzzahligen Wert ergibt. Hier ist die Rundung auf den nächsten Integer durch eine Abrundung des um 0,5 künstlich angehobenen Koeffizientenwertes ausgedrückt.

$$C_i^* = \llcorner a_0 \cdot C_{i-1} + a_1 \cdot C_{i+1} + a_2 \cdot C_{i-3} + a_3 \cdot C_{i+3} + \cdots + a_n C_{i+n} + 0.5 \lrcorner$$

Für den Aktualisierungsschritt gelten folgende Gleichungen.

$M_i$ sei der zu bestimmende Tiefpaßkoeffizient (Mittelwertkoeffizient) mit dem Index $i$

$K_i^*$ sei der Korrekturwert an der Stelle $i$

$M_i$ wird nun folgendermaßen bestimmt:

$$M_i = C_i + K_i^*$$

wobei sich $K_i^*$ wiederum als beidseitige Linearkombination aus den im Vorhersageschritt berechneten Hochpaßkoeffizienten mit korrekter Rundung

$$K_i^* = \llcorner b_0 \cdot D_{i-1} + b_1 \cdot D_{i+1} + b_2 \cdot D_{i-3} + b_3 \cdot D_{i+3} + \cdots + b_m \cdot D_{i+m} + 0.5 \lrcorner$$

ergibt.

Im Gegensatz zu anderen Wavelettransformationsmethoden ermöglicht die interpolierende Wavelettransformation der Erfindung unter der Voraussetzung von symmetrischen Koeffizienten der Linearkombination auch die Durchführung einer Transformation und einer exakten Rekonstruktion der Daten bei ungeradzahligen Signalgrößen (ungeradzahlige Anzahl von Abtastwerten bei eindimensionalen Signalen, ungeradzahlige Höhe und Breite von Bildern).

Werden die Transformationsschritte mehrfach hintereinander durchgeführt und wenn auch die Transformationsrichtung der einzelnen Schritte wechselt, dann erreicht man eine mehrdimensionale mehrstufige Wavelettransformation.

Konkret werden dann zur Durchführung einer zweidimensionalen einstufigen Transformation folgende Schritte nacheinander durchgeführt.

1. Eindimensionale Transformation einer Zeile in horizontaler Richtung

2. Abwechselnde eindimensionale Transformation der nächsten Zeile mit jeweils einem Eingangswertepaar in horizontaler Richtung, deren Ergebnisse dann in Verbindung mit den Ergebnissen der horizontalen Transformation der vorherigen Zeile ein Eingangswertepaar für eine eindimensionale Transformation in vertikaler Richtung bilden. Die Ergebniswerte können dann wiederum die Eingangswerte für eine eindimensionale Transformation in einer weiteren Richtung darstellen usw.

3. Weiter mit Schritt 1

Beispiel 3: Schaltungsanordnung der Transformationseinheit

Die Ausführungsform der Erfindung besteht aus zwei eindimensionalen Filtereinheiten, gemäß Fig. 7, die jeweils eine eindimensionale interpolierende Wavelettransformation ausführen können, einer Steuereinheit und einer Speichereinheit, die während der Berechnung auftretende Zwischenwerte aufnimmt.

Ein detailliertes Blockschaltbild der eindimensionalen Filtereinheit wird in Fig. 6 gezeigt Fig. 8 und Fig. 9 zeigen die speziellen Schaltungsanordnungen, die eine interpolierende Wavelettransformation mit Randbehandlung in horizontaler und in vertikaler Richtung durchführen. In diesem Falle wird eine symmetrische Linearkombination mit dem Koeffizienten 0,5 für den Vorhersageschritt und mit dem Koeffizienten 0,25 für den Aktualisierungsschritt benutzt. Dadurch läßt sich die Linearkombination in der Hardwareausführung durch einfache Verschiebungs- und Additionsoperationen berechnen, für deren Berechnung ein Registersatz, feste Shifter und eine Additionseinheit benötigt werden.

Die Steuereinheit besteht aus einer Zählerstufe und einer Kombinatorikeinheit. Die Steuereinheit steuert die Additionseinheit und die Shifter nach einem festgelegten Schema im Rhythmus der eingehenden Werte und Synchronisationsdaten.

Die Speichereinheit muß für die Berechnung einer einstufigen zweidimensionalen Transformation so dimensioniert werden, daß sie eine Datenmenge von Zwischenwerten aufnehmen kann, die der Datenmenge von 2 Eingangszeilen entspricht.

**Patentansprüche**

**1.** Verfahren zur mehrdimensionalen, diskreten Wavelet-Transformation, beispielsweise digitaler Daten oder digitalisierter Analogdaten mit interpolierenden Wavelets, wobei jeder Tiefpaßanteil einer Stufe mit beliebigen Dimensionen als Eingangswert für die nächstfolgende Stufe verwendet wird, dadurch gekennzeichnet,

- daß für jeden Eingangsdatenwert bei seinem Eintreffen in der Transformationseinheit ein Verarbeitungsschritt durchgeführt wird, der ihn mit den vorhergehenden Eingangswerten und / oder bereits vorliegenden Zwischenergebnissen verknüpft

- daß eine einstufige interpolierende Wavelet-Transformation in zwei Schritten, einem ersten Vorhersageschritt (Predict) und einem zweiten Aktualisierungsschritt (Update), erfolgt und die einzelnen Schritte mit Hilfe digitaler Filter mit endlicher Impulsantwort durchgeführt werden, die zur Bestimmung des Hoch- und Tiefpaßanteiles eingesetzt werden,

- daß für eine zweidimensionale Transformation mit einer 1. Dimension von n Eingangswerten n Transformationseinheiten zur Transformation der n Ausgangswerte (n/2 Hochpaß, n/2 Tiefpaß) der ersten Dimension (horizontal) in Richtung der 2. Dimension (Vertikal) benötigt werden oder die n Transformationseinheiten der 2. Dimension durch nur eine Transformationseinheit mit n-fachem Zwischenspeicher ersetzt werden,

- daß für eine Erweiterung von k auf k+1 Dimensionen mit $n_1 ... n_k$ Eingangswerten der Dimensionen 1 ... k zur Transformation der $n_1$ x $n_2$ x ... x $n_k$ Ausgangswerte der $k^{ten}$ Dimension $n_1$ x $n_2$ x .. x $n_k$ Transformationseinheiten benötigt werden

- und daß die digitalen Daten in einer ihrer k-Dimensionen unendliche Ausdehnung besitzen können.

**2.** Verfahren nach Anspruch 1, dadurch gekennzeichnet,

- daß für eine adaptive Wavelet-Transformation die Filterkoeffizienten abhängig von den Eingangsdaten bestimmt werden.

**3.** Verfahren nach Anspruch 1 und 2, dadurch gekennzeichnet,

- daß für eine invertierbare Wavelet-Transformation mit ganzzahligen Eingangs- und Ausgangswerten eine korrekte Rundung innerhalb des Vorhersage- und Aktualisierungsschrittes ausgeführt wird.

**4.** Verfahren nach Anspruch 1, 2 und 3 dadurch gekennzeichnet,

- daß zur Durchführung der inversen Wavelet-Transformation die Verarbeitungsschritte in umgekehrter Reihenfolge durchgeführt werden.

**5.** Transformationseinheit zur Durchführung des Verfahrens nach Ansprüchen 1 bis 3, bestehend aus

- einer Kettenschaltung mehrerer einstufiger Filtereinheiten, von denen sich jede aus einer horizontalen und einer vertikalen Filtereinheit zusammensetzt, wobei die vertikale Filtereinheit über Speicherschnittstellen mit zwei Arbeitsspeichern kommuniziert, welche die jeweils bereitgestellten Zwischenwerte aufnehmen,

- gesonderten seriellen Schnittstellen zur Ausgabe der Hoch- und Tiefpaßkoeffizienten.

**6.** Transformationseinheit nach Anspruch 5, dadurch gekennzeichnet,

- daß der Eingangsdatenstrom der horizontalen Filtereinheit aus dem seriellen Pixelstrom besteht und

- deren Steuerung über die Synchronisationssignale erfolgt.

**7.** Inverse Transformationseinheit nach Anspruch 5 und 6, bestehend aus

- einer Kettenschaltung mehrerer einstufiger Filtereinheiten, von denen sich jede aus einer horizontalen und einer vertikalen Filtereinheit zusammensetzt, wobei die vertikale Filtereinheit über Speicherschnittstellen mit zwei Arbeitsspeichern kommuniziert, welche die jeweils bereitgestellten Zwischenwerte aufnehmen,

- gesonderten seriellen Schnittstellen zur Eingabe der Hoch- und Tiefpaßkoeffizienten.

**8.** Inverse Transformationseinheit nach Anspruch 7, dadurch gekennzeichnet,

- daß der Ausgangsdatenstrom der horizontalen Filtereinheit aus einem seriellen Pixelstrom besteht und

- deren Steuerung über Synchronisationssignale erfolgt.

**9.** Transformationseinheit nach Anspruch 5 bis 8, dadurch gekennzeichnet,

- daß die Steuereinheit aus einer Zählerstufe und einer Kombinatorikeinheit besteht und die Additionseinheit und die Shifter im Rhythmus der eingehenden Werte und Synchronisationsdaten steuert.

**Claims**

1.  Method for multidimensional, discrete wavelet transformation, for example of digital data or digitized analogue data with the aid of interpolating wavelets, each lowpass component of one stage with arbitrary dimensions being used as input value for the next stage, characterized

    -   in that upon its arrival in the transformation unit, there is carried out for each input data value a processing step which combines it with the preceding input values and/or intermediate results already present,
    -   in that a single-stage interpolating wavelet transformation is performed in two steps, a first prediction step (predict) and a second updating step (update), and the individual steps are carried out with the aid of digital filters with a finite pulse response, which are used to determine the bypass and lowpass components,
    -   in that a two-dimensional transformation with a $1^{st}$ dimension of n input values requires n transformation units for transforming the n output values (n/2 highpass, n/2 lowpass) of the first dimension (horizontal) in the direction of the $2^{nd}$ dimension (vertical), or the n transformation units of the $2^{nd}$ dimension are replaced for this purpose by one transformation unit with a n-fold buffer,
    -   in that $n_1 \times n_2 ... \times n_k$ transformation units are required for expanding from k to k + 1 dimensions with $n_1 ... n_k$ input values of the dimensions 1 ... k for transforming the $n_1$ x $n_2 \times ... \times n_k$ output values of the $k^{th}$ dimension
    -   and in that the digital data can be of infinite extent in one of their key dimensions.

2.  Method according to Claim 1, characterized

    -   in that the filter coefficients are determined as a function of the input data for an adaptive wavelet transformation.

3.  Method according to Claims 1 and 2, characterized

    -   in that a correct rounding off is carried out within the prediction and updating steps for an invertible wavelet transformation with integral input and output values.

4.  Method according to Claims 1, 2 and 3, characterized

    -   in that the processing steps are carried out in the first sequence in order to carry out the inverse wavelet transformation.

5.  Transformation unit for carrying out the method according to Claims 1 to 3, comprising

    -   a ladder network of a plurality of single-stage filter units of which each is composed of a horizontal and a vertical filter unit, the vertical filter unit communicating via memory interfaces with two main memories which pick up the intermediate values respectively provided, and
    -   separate serial interfaces for outputting the highpass and lowpass coefficients.

6.  Transformation unit according to Claim 5, characterized

    -   in that the input data stream of the horizontal filter unit comprises the serial pixel stream, and
    -   said unit is controlled via the synchronization signals.

7.  Inverse transformation unit according to Claims 5 and 6, comprising

    -   a ladder network of a plurality of single-stage filter units of which each is composed of a horizontal and a vertical filter unit, the vertical filter unit communicating via memory interfaces with two main memories which pick up the intermediate values respectively provided, and
    -   separate serial interfaces for inputting the high pass and lowpass coefficients.

8.  Inverse transformation unit according to Claim 7, characterized

    -   in that the output data stream of the horizontal filter unit comprises the serial pixel stream, and
    -   said unit is controlled via the synchronization signals.

9. Transformation unit according to Claims 5 to 8, characterized

- in that the control unit comprises a counter stage and a combinatorial logic unit and controls the addition unit and the shifters in the rhythm of the incoming values and synchronization data.


**Revendications**

1. Procédé pour la transformation multidimentionnelle d'ondelettes, par exemple des données numériques ou des données analogiques numérisées avec des ondelettes interpolées, chaque partie passe-bas d'un étage de dimensions quelconques étant utilisée comme valeur d'entrée pour l'étage suivant, caractérisé en ce

- qu'une étape de traitement est effectuée pour chaque valeur des données d'entrée lors de son arrivée dans l'unité de transformation, laquelle la lie avec les valeurs d'entrée précédentes et / ou des résultats intermédiaires déjà existants,
- qu'une transformation d'ondelette interpolée à un niveau est effectuée en deux étapes, une première étape de prédiction (Predict) et une deuxième étape de mise à jour (Updace) et chacune des étapes est effectuée à l'aide de filtres numériques à réponse impulsionnelle finale qui sont utilisés pour déterminer la partie passe-haut et passe-bas,
- que pour une transformation en deux dimensions avec une $1^{ère}$ dimension de n valeurs d'entrée, n unités de transformation sont nécessaires pour transformer les n valeurs de sortie (n/2 passe-haut, n/2 passe-bas) de la première dimension (horizontale) en direction de la $2^{ème}$ dimension (verticale) ou les n unités de transformation de la $2^{ème}$ dimension sont remplacées par une seule unité de transformation avec une mémoire intermédiaire à n cases,
- que $n_1$ x $n_2$ x ... x $n_k$ unités de transformation sont nécessaires pour une extension de k à k+1 dimensions avec $n_1$ ... $n_k$ valeurs d'entrée des dimensions 1 ... k pour transformer les $n_1$ x $n_2$ x ... x $n_k$ valeurs de sortie de la $k^{ième}$ dimension,
- et que les données numériques peuvent posséder une étendue différente dans leurs k dimensions.

2. Procédé selon la revendication 1, caractérisé en ce que les coefficients de filtrage sont déterminés en fonction des données d'entrée pour obtenir une transformation d'ondelette adaptative.

3. Procédé selon la revendication 1 ou 2, caractérisé en ce qu'un arrondi correct est effectué dans l'étape de prédiction et de mise à jour afin d'obtenir une transformation d'ondelette réversible avec des valeurs d'entrée et de sortie entières.

4. Procédé selon les revendications 1, 2 et 3, caractérisé en ce que l'étape de traitement est effectuée en sens inverse pour effectuer la transformation d'ondelette inverse.

5. Unité de transformation pour effectuer le procédé selon les revendications 1 à 3, composée de

- un circuit en cascade de plusieurs unités de filtrage à un étage dont chacune d'entre elles est composée d'une unité de filtrage horizontale et d'une verticale, l'unité de filtrage verticale communiquant par le biais d'interfaces de mémorisation avec deux mémoires de travail qui enregistrent les différentes valeurs intermédiaires présentées,
- des interfaces séries spéciales pour délivrer les coefficients passe-bas et passe-haut.

6. Unité de transformation selon la revendication 5, caractérisée en ce

- que le flux de données en entrée de l'unité de filtrage se compose du flux de pixels série et
- que leur commande s'effectue par le biais des signaux de synchronisation.

7. Unité de transformation inverse selon les revendications 5 et 6, composée de

- un circuit en cascade de plusieurs unités de filtrage à un étage dont chacune d'entre elles est composée d'une unité de filtrage horizontale et d'une verticale, l'unité de filtrage verticale communiquant par le biais d'interfaces de mémorisation avec deux mémoires de travail qui enregistrent les différentes valeurs intermédiaires présentées,

- des interfaces séries spéciales pour entrer les coefficients passe-bas et passe-haut.

8. Unité de transformation inverse selon la revendication 7, caractérisée en ce

 - que le flux de données en sortie de l'unité de filtrage se compose du flux de pixels série et
 - que leur commande s'effectue par le biais des signaux de synchronisation.

9. Unité de transformation selon la revendication 5 à 8, caractérisé en ce

 - que l'unité de commande se compose d'un étage de comptage et d'une unité combinatoire et l'unité additionneuse et le registre à décalage commandent les données de synchronisation au rythme des valeurs entrantes.

Fig. 1: Durchführung einer Wavelettransformation mittels eines Analysefilterpaares

Fig. 2: Durchführung der inversen Wavelettransformation mittels eines Rekonstruktionsfilterpaares

Fig. 3: Durchführung einer mehrstufigen Wavelettransformation

**Fig. 4: Vorhersageschritt einer verlustbehafteten interpolierenden Wavelettransformation**

**Fig. 5: Vorhersageschritt einer verlustlosen interpolierenden Wavelettransformation**

**Fig. 6: Blockschaltbild der Grundeinheit der eindimensionalen Transformation des Ausführungsbeispiels**

**Fig. 7: Blockschaltbild der Gesamteinheit der einstufigen zweidimensionalen Transformationseinheit**

**Fig. 8: Schaltbild der horizontalen Filtereinheit der Transformationsstufe**

Fig. 9: Schaltbild der vertikalen Stufe der einstufigen Transformationseinheit